# EUROPEAN PATENT APPLICATION

(11) **EP 4 333 006 A1**
(43) Date of publication of application: **06.03.2024**
(21) Application number: 22795863.4
(22) Date of filing: 27.04.2022
(51) Int. Cl.: H01G 11/78, H01G 11/84, H01M 50/105, H01M 50/121, H01M 50/126, H01M 50/131, H01M 50/184, H01M 50/193, H01M 50/197, H01M 50/198, H01M 50/342

(54) **ADHESIVE FILM, POWER STORAGE DEVICE, AND METHOD FOR MANUFACTURING POWER STORAGE DEVICE**

(30) Priority: 27.04.2021 JP 2021075440
(71) Applicant: DAI NIPPON PRINTING CO., LTD., Tokyo 162-8001 (JP)
(72) Inventor: SASAKI, Miho, Tokyo 162-8001 (JP); YAMASHITA, Takanori, Tokyo 162-8001 (JP); FUJIWARA, Ryo, Tokyo 162-8001 (JP)
(74) Representative: Müller-Boré & Partner Patentanwälte PartG mbB
(86) International application number: PCT/JP2022/019133
(87) International publication number: WO 2022/230950

(57) **Abstract**

This adhesive film is used for a power storage device, wherein the power storage device comprises a structure in which a power storage device element is accommodated in a package formed by a power storage device exterior material, the power storage device exterior material is composed of a laminate including at least a base material layer, a barrier layer, and thermally fusible resin layers in this order from the outside, the thermally fusible resin layers of the power storage device exterior material are thermally fused together to accommodate the power storage device element in the package, the adhesive film is used so as to be interposed between the thermally fusible resin layers at a position where the thermally fusible resin layers are thermally fused together, the adhesive film has a multilayer structure, and the adhesive film includes at least one resin layer L having a melting peak temperature of 100-135°C.

## Description

### TECHNICAL FIELD

The present disclosure relates to an adhesive film, an electrical storage device, and a method for manufacturing an electrical storage device.

### BACKGROUND ART

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer and a heat-sealable resin layer laminated in the stated order has been proposed as an exterior material for electrical storage devices which is easily processed into diversified shapes and is capable of achieving thickness reduction and weight reduction. When such a laminated film-shaped exterior material for electrical storage devices is used, an electrical storage device element is sealed with the exterior material for electrical storage devices by heat-sealing the peripheral edge portion of the exterior material for electrical storage devices while the heat-sealable resin layers located at the innermost layer of the exterior material for electrical storage devices are opposed to each other.

### PRIOR ART DOCUMENTS

### PATENT DOCUMENTS

Patent Document 1: Japanese Patent Laid-open Publication No. 2015-79638
Patent Document 2: Japanese Patent Laid-open Publication No. 2002-8616

### SUMMARY OF THE INVENTION

### PROBLEMS TO BE SOLVED BY THE INVENTION

For example, in recent years, with high-speed and large-capacity data communication by smartphones, the amount of electricity consumed has increased, and an attempt has been made to increase the capacity of electrical storage devices. However, increasing the capacity of a battery involves an increase in container size and an increase in amount of reactive substances, and also leads to an increase in amount of gas generated if thermal runaway of an electrical storage device occurs (i.e., the temperature of the electrical storage device increases), thus raising the risk of explosion caused by an increase in internal pressure of the electrical storage device. In an electrical storage device (for example, a metal can battery) with a metallic exterior material, a safety valve is attached to secure safety at the time of generation of gas (see Patent Document 2).

However, in an electrical storage device with a laminated film-shaped exterior material, it is difficult to attach such a safety valve, and avoiding expansion of the electrical storage device which is caused by gas generated inside the electrical storage device having reached a high temperature is a challenge.

Under these circumstances, a main object of the present disclosure is to provide an adhesive film that is interposed between heat-sealable resin layers in a heat-sealing portion of an exterior material of an electrical storage device, the adhesive film being capable of sealing the electrical storage device until the electrical storage device reaches a high temperature (for example, about 100°C to 120°C), and unsealing the electrical storage device at the location of the adhesive film between the heat-sealable resin layers to release gas generated inside the electrical storage device to the outside when the electrical storage device reaches the high temperature (for example, about 100°C to 125°C). Further, an object of the present disclosure is to provide an electrical storage device utilizing the adhesive film, and a method for manufacturing the electrical storage device.

### MEANS FOR SOLVING THE PROBLEMS

The inventors of the present disclosure have extensively conducted studies for solving the above-described problems. As a result, it has been found that when an adhesive film having a predetermined melting peak temperature is interposed between the heat-sealable resin layers of the exterior material for electrical storage devices in a heat-sealing portion of the exterior material for electrical storage devices, it is possible to seal the electrical storage device until the electrical storage device reaches a high temperature (for example, about 100°C to 125°C), and unseal the electrical storage device at the location of the adhesive film between the heat-sealable resin layers to release gas generated inside the electrical storage device to the outside when the electrical storage device reaches the high temperature (for example, about 100°C to 125°C). The present disclosure is an invention that has been completed by further conducting studies based on the above-mentioned findings.

That is, the present disclosure provides an invention of an aspect as described below.

An adhesive film that is used for an electrical storage device,
the electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film having a multi-layered structure, and
the adhesive film including at least one resin layer L having a melting peak temperature of 100°C or higher and 135°C or lower.

### ADVANTAGES OF THE INVENTION

According to the present disclosure, it is possible to provide an adhesive film that is interposed between heat-sealable resin layers in a hear-sealing portion of an exterior material of an electrical storage device, the adhesive film being capable of sealing the electrical storage device until the electrical storage device reaches a high temperature (for example, about 100°C to 125°C), and unsealing the electrical storage device at the location of the adhesive film between the heat-sealable resin layers to release gas generated inside the electrical storage device to the outside when the electrical storage device reaches the high temperature (for example, about 100°C to 125°C). Further, the present disclosure can also provide an electrical storage device utilizing the adhesive film, and a method for manufacturing the electrical storage device.

### BRIEF DESCRIPTION OF THE DRAWINGS

Fig. 1 is a schematic plan view of an electrical storage device of the present disclosure.
Fig. 2 is a schematic sectional view taken along line A-A' in Fig. 1.
Fig. 3 is a schematic sectional view of an adhesive film of the present disclosure.
Fig. 4 is a schematic sectional view of an adhesive film of the present disclosure.
Fig. 5 is a schematic sectional view of an adhesive film of the present disclosure.
Fig. 6 is a schematic sectional view of an adhesive film of the present disclosure.
Fig. 7 is a schematic sectional view of an adhesive film of the present disclosure.
Fig. 8 is a schematic sectional view of an exterior material for electrical storage devices according to the present disclosure.

### EMBODIMENTS OF THE INVENTION

The adhesive film of the present disclosure is an adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film having a multi-layered structure,
the adhesive film including at least one resin layer L having a melting peak temperature of 100°C or higher and 135°C or lower.

Owing to the above-mentioned characteristics, the adhesive film of the present disclosure is capable of sealing the electrical storage device until the electrical storage device reaches a high temperature (for example, about 100°C to 125°C), and unsealing the electrical storage device at the location of the adhesive film between the heat-sealable resin layers to release gas generated inside the electrical storage device to the outside when the electrical storage device reaches the high temperature (for example, about 100°C to 125°C).

The electrical storage device of the present disclosure is an electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being disposed so as to be interposed between the heat-sealable resin layers at a location where the heat-sealable resin layers are heat-sealed,
the adhesive film having a multi-layered structure,
the adhesive film including at least one resin layer L having a melting peak temperature of 100°C or higher and 135°C or lower.

That is, for the electrical storage device of the present disclosure, the adhesive film of the present disclosure is utilized, so that it is possible to seal the electrical storage device until the electrical storage device reaches a high temperature (for example, about 100°C to 125°C), and unseal the electrical storage device at the location of the adhesive film between the heat-sealable resin layers to release gas generated inside the electrical storage device to the outside when the electrical storage device reaches the high temperature (for example, about 100°C to 125°C).

Hereinafter, the adhesive film, the method for manufacturing the adhesive film, the electrical storage device and the method for manufacturing the electrical storage device according to the present disclosure will be described in detail.

For the numerical range in this specification, a numerical range indicated by the term "A to B" means "A or more" and "B or less". For example, the expression of "2 to 15 mm" means 2 mm or more and 15 mm or less.

### 1. Adhesive film

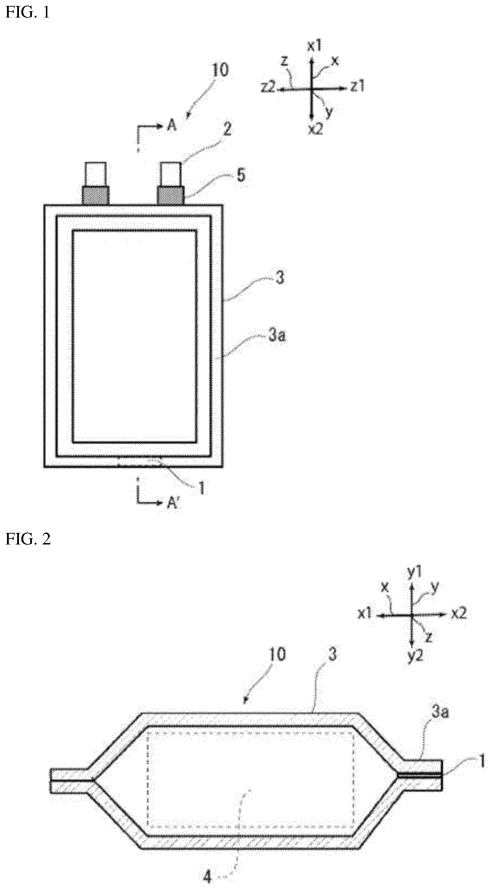

The adhesive film of the present disclosure is an adhesive film used for an electrical storage device. The adhesive film of the present disclosure is used by being interposed between the heat-sealable resin layers at a location where the heat-sealable resin layers of the exterior material for electrical storage devices are heat-sealed. As shown in, for example, Figs. 1 and 2, an adhesive film 1 of the present disclosure is interposed between heat-sealable resin layers facing each other at the location of a peripheral edge portion 3a of an exterior material 3 for electrical storage devices where the heat-sealable resin layers are heat-sealed for sealing an electrical storage device element 4 in an electrical storage device 10 of the present disclosure. The adhesive film and the heat-sealable resin layer on each of both sides thereof are heat-sealed in sealing of the electrical storage device element 4 with the exterior material 3 for electrical storage devices. That is, both surfaces of the adhesive film can be each heat-sealed to the heat-sealable resin layer.

The adhesive film 1 of the present disclosure seals the electrical storage device 10 until the electrical storage device 10 reaches a high temperature (for example, about 100°C to 125°C), and unseals the electrical storage device at the location of the adhesive film between the heat-sealable resin layers to release gas generated inside the electrical storage device to the outside when the electrical storage device reaches the high temperature (for example, about 100°C to 125°C). By disposing the adhesive film 1 at a part of the location where the heat-sealable resin layers of the exterior material for electrical storage devices are heat-sealed, gas can be selectively discharged to the outside from the specific location where the adhesive film 1 is disposed. That is, the location where gas is discharged can be set at any location in the hear-sealing portion between the heat-sealable resin layers.

The location where the adhesive film of the present disclosure is disposed is not particularly limited as long as it is a location where the heat-sealable resin layers of the exterior material for electrical storage devices are heat-sealed. For example, when the electrical storage device has an oblong shape in plan view, the adhesive film may be disposed on either the long side or the short side of the peripheral edge portion 3a of the heat-sealed exterior material 3 for electrical storage devices. The adhesive film of the present disclosure may be disposed at one, or two or more, of locations where the heat-sealable resin layers of the exterior material for electrical storage devices are heat-sealed.

The size of the adhesive film is not particularly limited as long as gas is appropriately discharged at the time of unsealing. For example, when as shown in Fig. 1, the electrical storage device has a rectangular shape in plan view, and the adhesive film is disposed along one side of the rectangular shape (in the example of Fig. 1, the adhesive film is disposed along the z direction), the ratio of the length of the adhesive film to the length of the side may be about 3 to 98%. The size of the adhesive film in the width direction (a direction perpendicular to the length direction and the thickness direction; or a direction along the x direction in the example of Fig. 1) may be about 20 to 300% with respect to the size of the adhesive film in the length direction, which is defined as 100%.

In the electrical storage device 10, a metal terminal 2 is electrically connected to the electrical storage device element 4, and protrudes to the outside of the exterior material 3 for electrical storage devices. It is preferable that the adhesive film of the present disclosure is not located between the metal terminal 2 and the exterior material 3 for electrical storage devices (heat-sealable resin layer). Further, it is preferable that the adhesive film 1 of the present disclosure is not in contact with the metal terminal 2.

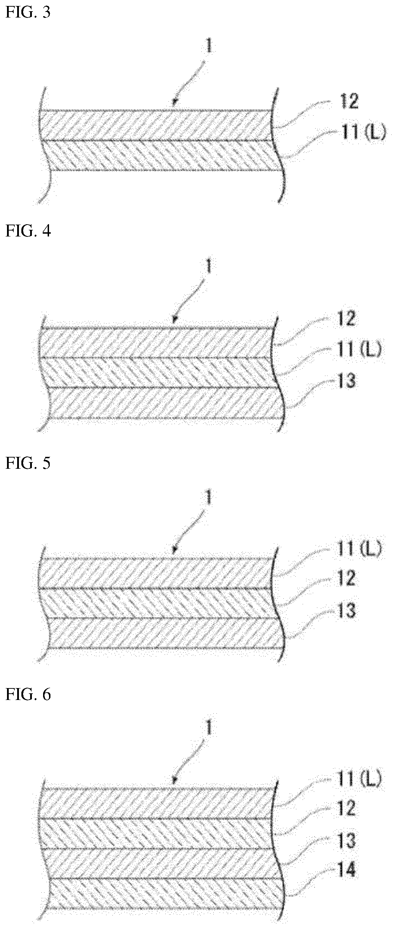

As shown in Figs. 3 to 7, the adhesive film 1 of the present disclosure has a multi-layered structure, and includes at least one resin layer L having a melting peak temperature of 100°C or higher and 135°C or lower. In the schematic views of Figs. 3 to 7, at least a first layer 11 is a layer corresponding to the resin layer L, but the adhesive film 1 may include two or more layers corresponding to the resin layer L. Since the melting peak temperature of the resin layer L is in the predetermined range, interposition of the adhesive film between the heat-sealable resin layers in a heat-sealing portion of the exterior material 3 of the electrical storage device enables sealing the electrical storage device until the electrical storage device reaches a high temperature (for example, about 100°C to 125°C), and unsealing the electrical storage device at the location of the adhesive film 1 (in particular, location of the resin layer L) between the heat-sealable resin layers to release gas generated inside the electrical storage device to the outside when the electrical storage device reaches the high temperature (for example, about 100°C to 125°C).

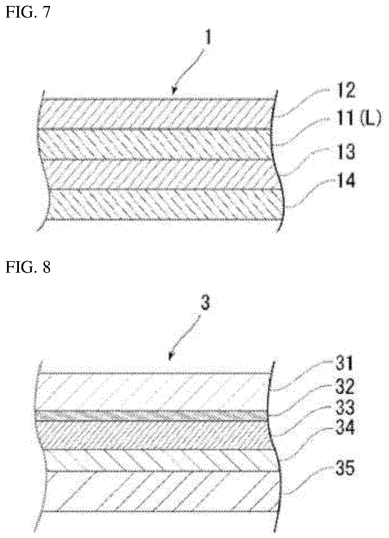

In the adhesive film 1 of the present disclosure, at least the first layer 11 is a layer corresponding to the resin layer L. Examples of the laminated configuration of the adhesive film 1 of the present disclosure include a two-layered configuration in which the first layer 11 and a second layer 12 are laminated in this order (see Fig. 3); three-layered configuration in which the second layer 12, the first layer 11 and a third layer 13 are laminated in this order (see Fig. 4); a three-layer configuration in which the first layer 11, the second layer 12 and the third layer 13 are laminated in this order (see Fig. 5); a four-layered configuration in which the first layer 11, the second layer 12 and the third layer 13 and a fourth layer 14 are laminated in this order (see Fig. 6); and a four-layered configuration in which the second layer 12, the first layer 11, the third layer 13 and the fourth layer 14 are laminated in this order (see Fig. 7).

In the adhesive film 1 of the present disclosure, at least one of the layers other than the first layer 11 (other layers described later) may also be a layer corresponding to the resin layer L. For example, at least one of the second layer 12, the third layer 13 and the fourth layer 14 in Figs. 3 to 7 may also be a layer corresponding to the resin layer L. However, by providing a layer having a melting peak temperature higher than that of the resin layer L (for example, a layer whose melting peak temperature is higher than 135°C, i.e., the upper limit of the melting peak temperature of the resin layer L) in the adhesive film 1 of the present disclosure, the resin layer L having a reduced thickness is easily designed. When the thickness of the resin layer L is reduced, there is an advantage that discharge of gas becomes gentle at the time of unsealing the electrical storage device. As described above, the adhesive film 1 of the present disclosure has a multi-layered structure of the resin layer L whose melting peak temperature is set to be within a predetermined range, and other layers, thereby enabling various functional designs.

As will be described later, it is desirable that the melting peak temperature of each of layers other than the resin layer L be equal to or higher than 100°C, i.e., the lower limit of the melting peak temperature of the resin layer L. From the same viewpoint, it is desirable that the melting peak temperature of the heat-sealable resin layer 35 of the exterior material 3 for electrical storage devices be equal to or higher than 100°C, i.e., the lower limit of the melting peak temperature of the resin layer L, and it is more desirable that the melting peak temperature of the heat-sealable resin layer 35 be higher than 100°C, i.e., the lower limit of the melting peak temperature of the resin layer L, in the electrical storage device 10 to which the adhesive film of the present disclosure is applied.

From the viewpoint of suitably exhibiting the effect of the present disclosure, the total thickness of the adhesive film 1 of the present disclosure is, for example, about 5 µm or more, preferably about 20 µm or more, more preferably about 30 µm or more. The total thickness of the adhesive film 1 of the present disclosure is, for example, about 500 µm or less, preferably 200 µm or less, more preferably about 180 µm. The total thickness of the adhesive film 1 of the present disclosure is preferably in the range of about 5 to 500 µm, about 5 to 200 µm, about 5 to 180 µm, about 20 to 500 µm, about 20 to 200 µm, about 20 to 180 µm, about 30 to 500 µm, about 30 to 200 µm, or about 30 to 180 µm. As a more specific example, for example, the total thickness is preferably about 60 to 100 µm when the adhesive film 1 of the present disclosure is used for consumer electrical storage devices, and the total thickness is preferably about 100 to 200 µm when the adhesive film 1 of the present disclosure is used for vehicle-mounted electrical storage devices.

Hereinafter, materials of the resin layer L (first layer 11) and other layers (for example, second layer 12, third layer 13, fourth layer 14 and the like) in the adhesive film 1 of the present disclosure, and the thicknesses of the layers will be described in detail.

### [First layer 11 (resin layer L)]

In the adhesive film 1 of the present disclosure, the first layer 11 is a layer corresponding to the resin layer L having a melting peak temperature of 100°C or higher and 135°C or lower.

The material for forming the resin layer L is not particularly limited as long as the melting peak temperature is within the above-described predetermined range. The resin layer L is preferably a layer containing a polyolefin-based resin (i.e., having a polyolefin backbone), more preferably a layer formed of a polyolefin-based resin. Examples of the polyolefin-based resin include polyolefins such as polyethylene and polypropylene. The polyolefin-based resin may be a resin obtained by acid-modifying a polyolefin (acid-modified polyolefin). The acid-modified polyolefin is not particularly limited as long as it is a polyolefin modified with an acid, and a polyolefin graft-modified with an unsaturated carboxylic acid or an anhydride thereof is preferable. Examples thereof include acid-modified polyethylene and acid-modified polypropylene.

Examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

For the polyolefin that is acid-modified into an acid-modified polyolefin, the above-mentioned polyolefins are preferable. For example, the carboxylic acid-modified cyclic polyolefin is a polymer obtained by performing copolymerization with an α,β-unsaturated carboxylic acid or an anhydride thereof replacing a part of monomers that form the cyclic polyolefin, or by block-polymerizing or graftpolymerizing an α,β-unsaturated carboxylic acid or an anhydride thereof with the cyclic polyolefin.

Examples of the carboxylic acid or anhydride thereof which is used for acid modification include maleic acid, acrylic acid, itaconic acid, crotonic acid, maleic anhydride and itaconic anhydride. It is preferable that a peak derived from maleic anhydride is detected when the polyolefin-based resin is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. That is, in this case, when the polyolefin-based resin is measured by infrared spectroscopy, a peak derived from maleic anhydride is detected. However, if the degree of acid modification is low, the peaks may be too small to be detected. In that case, the peaks can be analyzed by nuclear magnetic resonance spectroscopy.

The resin layer L may be formed from one resin component alone, or may be formed from a blend polymer obtained by combining two or more resin components. From the viewpoint of the film formability of the resin layer L, it is preferable to form the resin layer L from a blend polymer obtained by combining two or more resin components. When formed from the blend polymer, it is preferable that the resin layer L contains acid-modified polypropylene as a main component (the content of the component is 50 mass% or more), and other resins in an amount of 50 mass% or less (preferably polyethylene from the viewpoint of improving flexibility). On the other hand, from the viewpoint of enhancing the electrolytic solution resistance of the resin layer L, it is preferable that the resin layer L contains polypropylene or acid-modified polypropylene alone as a resin.

The resin layer L may contain an adhering component. Examples of the adhering component include elastomers.

The elastomer is not particularly limited as long as it is blended together with a polyolefin to exhibit adhesion, and for example, an elastomer (thermoplastic elastomer) formed of a thermoplastic resin is preferable.

As the elastomer, styrene-based elastomers, olefin-based elastomers, acryl-based elastomers, silicone-based elastomers, urethane-based elastomers, polyester-based elastomers, polyamide-based elastomers, rubber-based elastomers and the like are preferable. The elastomers may be used alone, or may be used in combination of two or more thereof.

The type of styrene elastomer is not particularly limited, and specific examples thereof include styrene-butadiene-styrene block copolymers, styrene-isoprene-styrene block copolymers, styrene-ethylene-butylene-styrene block copolymers, and styrene-ethylene-propylene-styrene block copolymers.

Examples of the olefin-based elastomer include copolymers of α-olefins having 2 to 20 carbon atoms, such as ethylene, propylene, 1-butene, 1-hexene and 4-methylpentene, and for example, ethylene-propylene copolymers (EPR) and ethylene-propylene-diene copolymers (EPDM) are suitable. Examples thereof include copolymers of an α-olefin and a non-conjugated diene having 2 to 20 carbon atoms, such as dicyclopentadiene, 1,4-hexadiene, cyclooctadiene, methylene norbornene, ethylidene norbornene, butadiene or isoprene. Further, examples thereof include carboxy-modified nitrile rubber obtained by copolymerizing methacrylic acid with a butadiene-acrylonitrile copolymer.

The acryl-based elastomer contains an acrylic acid ester as a main component, and specifically, ethyl acrylate, butyl acrylate, methoxyethyl acrylate, ethoxyethyl acrylate and the like are suitably used. As the crosslinking point monomer, glycidyl methacrylate, allyl glycidyl ether, or the like is used. It is also possible to further copolymerize acrylonitrile and ethylene. Specific examples thereof include acrylonitrile-butyl acrylate copolymers, acrylonitrile-butyl acrylate-ethyl acrylate copolymers, and acrylonitrile-butyl acrylate-glycidyl methacrylate copolymers.

The silicone-based elastomer contains organopolysiloxane as a main component, and examples thereof include polydimethylsiloxane-based elastomers, polymethylphenylsiloxane-based elastomers, and polydiphenylsiloxane-based elastomers.

The urethane-based elastomer includes structural units of a hard segment including low-molecular-weight ethylene glycol and diisocyanate and a soft segment including high-molecular-weight (long-chain) diol and diisocyanate, and examples of the high-molecular-weight (long-chain) diol include polypropylene glycol, polytetramethylene oxide, poly (1,4-butylene adipate), poly (ethylene-1,4-butylene adipate), polycaprolactone, poly(1,6-hexylene carbonate), and poly(1,6-hexylene neopentylene adipate).

The polyester-based elastomer is obtained by polycondensation of a dicarboxylic acid or a derivative thereof and a diol compound or a derivative thereof. Specific examples of the dicarboxylic acid include aromatic dicarboxylic acids such as terephthalic acid, isophthalic acid, and naphthalenedicarboxylic acid, the same aromatic dicarboxylic acids as above except that a hydrogen atom of an aromatic nucleus is replaced with a methyl group, an ethyl group, a phenyl group or the like, aliphatic dicarboxylic acids having 2 to 20 carbon atoms, such as adipic acid, sebacic acid and dodecanedicarboxylic acid, and alicyclic dicarboxylic acids such as cyclohexanedicarboxylic acid. These compounds can be used alone, or used in combination of two or more thereof.

Specific examples of the diol compound include aliphatic diols and alicyclic diols such as ethylene glycol, 1,3-propanediol, 1,4-butanediol, 1,6-hexanediol, 1, 10 decanediol and 1,4-cyclohexanediol, and bisphenol A, bis-(4-hydroxyphenyl)-methane, bis-(4-hydroxy-3-methylphenyl)-propane, and resorcin. These compounds can be used alone, or used in combination of two or more thereof.

Examples of the polyamide-based elastomer include block copolymers containing polyamide as a hard segment component, and polybutadiene, a butadiene-acrylonitrile copolymer, a styrene-butadiene copolymer, polyisoprene, an ethylene-propylene copolymer, polyether, polyester, polybutadiene, polycarbonate, polyacrylate, polymethacrylate, polyurethane, silicone rubber or the like as a soft segment component.

Examples of the rubber-based elastomer include polyisobutylene.

Among the elastomers, styrene-based elastomers and olefin-based elastomers are preferable, and styrene-based elastomers are particularly preferable.

The proportion of the elastomers in the resin layer L is not particularly limited, and is preferably about 50 mass% or less, more preferably about 10 to 50 mass%, still more preferably about 10 to 40 mass%.

The melting peak temperature of the resin layer L may be in the range of 100°C or higher and 135°C or lower, and from the viewpoint of further suitably exhibiting the effect of the present disclosure, the melting peak temperature of the resin layer L is preferably about 105°C or higher, more preferably about 110°C or higher, and preferably about 130°C or lower, and is preferably in the range of about 100 to 135°C, about 100 to 130°C, 105 to 135°C, about 105 to 130°C, about 110 to 135°C, about 110 to 130°C, or the like.

From the viewpoint of further suitably exhibiting the effect of the present disclosure, the melting peak temperature of the resin layer L is preferably lower by 5°C or more, more preferably lower by 10°C or more, still more preferably lower by 15°C or more than that of the melting peak temperature of the heat-sealable resin layer 35 of the exterior material 3 for electrical storage devices.

In the present disclosure, a method for measuring the melting peak temperature is as follows.

### <Measurement of melting peak temperature>

For each resin, the melting peak temperature is measured in accordance with the provisions of JIS K 7121: 2012 (Testing Methods for Transition Temperatures of Plastics (Amendment 1 of JIS K 7121: 1987)). The measurement is performed with a differential scanning calorimeter (for example, DSC, Differential Scanning Calorimeter Q200 manufactured by TA Instruments). The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined, and the first measured melting peak temperature P is adopted as a melting peak temperature. When the measurement sample has a high melting peak temperature, the melting peak temperature may be measured by heating the sample from -50°C to 500°C at the same temperature rise rate.

From the viewpoint of more suitably exhibiting the effect of the present disclosure, the thickness of the first layer 11 is preferably about 0.1 µm or more, more preferably about 1 µm or more, still more preferably about 3 µm or more, and preferably about 500 µm or less, more preferably about 200 µm or less, still more preferably 100 µm or less. The thickness of the first layer 11 is preferably in the range of about 0.1 to 500 µm, about 0.1 to 200 µm, about 0.1 to 100 µm, about 1 to 500 µm, about 1 to 200 µm, or about 1 to 100 µm.

When a layer corresponding to the resin layer L (i.e., a layer having a melting peak temperature of 100°C or higher and 135°C or lower) is present in addition to the first layer 11 (for example, at least one of the second layer 12, the third layer 13 and the fourth layer 14 described later corresponds to the resin layer L), the total thickness of the resin layer L in the adhesive film 1 is preferably about 0.1 µm or more, more preferably about 3 µm or more, still more preferably about 5 µm or more, and preferably about 500 µm or less, more preferably about 200 µm or less, still more preferably about 100 µm or less. The total thickness of the resin layer L is preferably in the range of about 0.1 to 500 µm, about 0.1 to 200 µm, about 0.1 to 100 µm, about 3 to 500 µm, about 3 to 200 µm, about 3 to 100 µm, about 5 to 500 µm, about 5 to 200 µm, or about 5 to 100 µm.

In the present disclosure, from the viewpoint of more suitably exhibiting the effect of the present disclosure, the ratio of the thickness of the first layer 11 to the total thickness of the adhesive film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

When a layer corresponding to the resin layer L (i.e., a layer having a melting peak temperature of 100°C or higher and 135°C or lower) is present in addition to the first layer 11 (for example, at least one of the second layer 12, the third layer 13 and the fourth layer 14 described later corresponds to the resin layer L), the ratio of the total thickness of the resin layer L to the total thickness of the adhesive film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

### [Other layers (second layer 12, third layer 13, fourth layer 14, etc.)]

The adhesive film 1 of the present disclosure has a multi-layered structure, and includes, in addition to the first layer 11, at least the second layer 12 as another layer. The adhesive film 1 of the present disclosure is a laminate of the first layer 11 and the second layer 12 when having a two-layered structure, a laminate of the first layer 11, the second layer 12 and the third layer 13 when having a three-layered structure, a laminate of the first layer 11, the second layer 12, the third layer 13 and the fourth layer 14 when having a four-layered structure, and a laminate of the first layer 11, the second layer 12, the third layer 13, the fourth layer 14 and the fifth layer 15 when having a five-layered structure. The order in which the first layer 11 and the other layers is not particularly limited. The number of layers in the adhesive film 1 is not particularly limited, and is preferably 2 to 5, 2 to 4 layers, or the like.

As described above, other layers may include a layer corresponding to the resin layer L in the adhesive film 1 of the present disclosure. For example, at least one of the second layer 12, the third layer 13 and the fourth layer 14 in Figs. 3 to 7 may also be a layer corresponding to the resin layer L. At least one of the other layers may be a layer having a melting peak temperature higher than 135°C, i.e., the upper limit of the melting peak temperature of the resin layer L. For example, by providing a layer having a melting peak temperature higher than that of the resin layer L (for example, a layer whose melting peak temperature is higher than 135°C and which does not correspond to the resin layer L (hereinafter, sometimes referred to as a resin layer M)) in the adhesive film 1 of the present disclosure, the resin layer L having a reduced thickness is easily designed.

In the other layers, the material for forming the resin layer L is not particularly limited as long as the melting peak temperature is in the above-described predetermined range as in the case of the first layer 11. The resin layer L is preferably a layer containing a polyolefin-based resin (i.e., having a polyolefin backbone), more preferably a layer formed of a polyolefin-based resin. Specific examples of the polyolefin-based resin are as exemplified for the first layer 11.

The material for forming the other layer is not particularly limited. Examples of the material for forming the other layer include polyolefin-based resins, polyamide-based resins, polyester-based resins, epoxy resins, acrylic resins, fluororesins, silicone resins, phenol resins, silicon resins, polyurethane resins, polyether imide, polycarbonate, and mixtures and copolymers thereof. In particular, inclusion of a polyolefin-based resin is preferable, and inclusion of a layer formed of a polyolefin-based resin is more preferable. Even if the material for forming the other layer is a polyolefin-based resin, the other layer may be a layer (resin layer M) having a higher melting peak temperature than the resin layer L.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

At least one of the other layers may be formed of a nonwoven fabric formed of any of the resins described above. When the layer is formed from a nonwoven fabric, it is preferable that the nonwoven fabric is composed of the above-described polyolefin-based resin, polyamide resin or the like.

The melting peak temperature of a layer whose melting peak temperature is higher than 135°C and which does not correspond to the resin layer L (resin layer M), among the other layers, is preferably about 140°C or higher, more preferably about 160°C or higher, still more preferably about 180°C or higher, and preferably about 500°C or lower, more preferably about 450°C or lower, still more preferably about 350°C or lower, and is preferably in the range of higher than 135°C and 500°C or lower, higher than 135°C and 450°C or lower, higher than 135°C and 350°C or lower, about 140 to 500°C, about 140 to 450°C, about 140 to 350°C, about 160 to 500°C, about 160 to 450°C, about 160 to 350°C, about 180 to 500°C, about 180 to 450°C, about 180 to 350°C, or the like.

From the viewpoint of more suitably exhibiting the effect of the present disclosure, the total thickness of the other layers is preferably about 0.1 µm or more, more preferably about 1 µm or more, still more preferably about 5 µm or more, and preferably about 500 µm or less, more preferably about 300 µm or less, still more preferably about 200 µm or less. The total thickness of the other layers is preferably in the range of about 0.1 to 500 µm, about 0.1 to 300 µm, about 0.1 to 200 µm, about 1 to 500 µm, about 1 to 300 µm, about 1 to 200 µm, about 5 to 500 µm, about 5 to 300 µm, or about 5 to 200 µm.

When the other layers include a layer corresponding to the resin layer M (for example, at least one of the second layer 12, the third layer 13 and the fourth layer 14 described later corresponds to the resin layer M), the total thickness of the resin layer M in the adhesive film 1 is preferably about 5% or more, more preferably about 10% or more, still more preferably about 15% or more, and preferably about 95% or less, more preferably about 90% or less, still more preferably about 85% or less, and is preferably in the range of 5 to 95%, or 10 to 90%.

In the present disclosure, from the viewpoint of more suitably exhibiting the effect of the present disclosure, the ratio of the total thickness of the other layers to the total thickness of the adhesive film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

When the other layers include a layer corresponding to the resin layer M (for example, at least one of the second layer 12, the third layer 13 and the fourth layer 14 described later corresponds to the resin layer M), the ratio of the total thickness of the resin layer M to the total thickness of the adhesive film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

### (Additives)

At least one of the first layer 11 and the other layers may each contain additives such as a colorant such as a pigment, a filler, and a slipping agent in addition to the resin.

As the pigment, various inorganic pigments can be used. As a specific example of the pigment, carbon (carbon, graphite) exemplified for fillers described later can be preferably exemplified. Carbon (carbon, graphite) is a material generally used inside an electrical storage device, and can be suitably blended because it is unlikely to be dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to impart an excellent sealing property between the exterior material for electrical storage devices and the metal terminal by preventing a pressed portion from being thinned during thermal bonding (heat-sealing).

When a pigment is added to at least one of the first layer 11 and the other layers, for example, the addition amount of the pigment based on 100 parts by mass of resin components of the layers of the adhesive film 1 is about 0.05 to 0.3 parts by mass, preferably about 0.1 to 0.2 parts by mass, when carbon black having a particle size of about 0.03 µm is used. When both the pigment and the filler are added to the adhesive film 1, both the pigment of the filler may be added to one layer, but from the viewpoint of preventing impairment of the heat-sealing property of the adhesive film 1, it is preferable to add the filler and the pigment to different layers, respectively.

The particle size of the filler is in the range of about 0.1 to 35 µm, preferably about 5.0 to 30 µm, more preferably about 10 to 25 µm. The content of the filler based on 100 parts by mass of resin components forming the layers of the adhesive film 1 is about 5 to 30 parts by mass, more preferably about 10 to 20 parts by mass.

As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with resin components for forming the layers of the adhesive film 1, a method in which a masterbatch formed by melting and blending the resin components and the filler with a Banbury mixer or the like is adjusted to a predetermined mixing ratio; a method in which the filler is directly mixed with the resin components; or the like can be adopted.

From the viewpoint of enhancing the sealing property of the electrical storage device of the present disclosure, layers forming the surface of the adhesive film 1 may each contain a slipping agent. The concentration of the slipping agent is preferably 2,000 ppm or less, more preferably 1,500 ppm or less, still more preferably 1,000 ppm or less, and preferably 200 ppm or more, more preferably 500 ppm or more, and is preferably in the range of 200 to 2,000 ppm, about 200 to 1,500 ppm, about 200 to 1,000 ppm, about 500 to 2,000 ppm, about 500 to 1,500 ppm, or about 500 to 1,000 ppm.

The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebis stearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the layers forming the adhesive film 1 include a resin film, surfaces of these layers may be subjected to known easy-adhesive means such as corona discharge treatment, ozone treatment or plasma treatment if necessary.

In manufacturing of the adhesive film 1 of the present disclosure, the layers can be laminated by a known method such as an extrusion lamination method, a T-die method, an inflation method, or a thermal lamination method.

### [Exterior material 3 for electrical storage devices]

Examples of the exterior material 3 for electrical storage devices include materials having a laminated structure including a laminate having at least a base material layer 31, a barrier layer 33, and a heat-sealable resin layer 35 in the stated order. Fig. 8 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-sealed to seal the electrical storage device element 4, so that the electrical storage device element 4 is sealed. Figs. 1 and 2 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, and the upper limit is preferably about 180 µm or less, about 160 µm or less, about 155 µm or less, about 140 µm or less, about 130 µm or less, or about 120 µm or less from the viewpoint of cost reduction, improvement of the energy density and the like, and the lower limit is preferably about 35 µm or more, about 45 µm or more, about 60 µm or more, or about 80 µm or more from the viewpoint of maintaining the function of the exterior material 3 for electrical storage devices, i.e., a function of protecting the electrical storage device element 4. For example, the thickness is preferably in the range of about 35 to 180 µm, about 35 to 160 µm, about 35 to 155 µm, about 35 to 140 µm, about 35 to 130 µm, about 35 to 120 µm, about 45 to 180 µm, about 45 to 160 µm, about 45 to 155 µm, about 45 to 140 µm, about 45 to 130 µm or more, about 45 to 120 µm, about 60 to 180 µm, about 60 to 160 µm, about 60 to 155 µm, about 60 to 140 µm, about 60 to 130 µm, about 60 to 120 µm, about 80 to 180 µm, about 80 to 160 µm, about 80 to 155 µm, about 80 to 140 µm, about 80 to 130 µm or about 80 to 120 µm.

The adhesive film 1 of the present disclosure can be suitably applied to an exterior material for all-solid-state batteries, and the thickness of the laminate forming the exterior material for the all-solid-state battery is not particularly limited, and is preferably about 10,000 µm or less, about 8,000 µm or less, or about 5,000 µm or less from the viewpoint of cost reduction, improvement of the energy density and the like, and preferably about 100 µm or more, about 150 µm or more, or about 200 µm or more from the viewpoint of maintaining the function of the exterior material 3 for all-solid-state batteries, i.e., a function of protecting a battery element. The thickness of the laminate is preferably, in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, or about 200 to 5,000 µm, and particularly preferably about 100 to 500 µm.

### (Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31. Since the all-solid-state battery has tolerance to a temperature of 150°C or higher, sealing is often performed at a high temperature of 200°C or higher, and biaxially stretched polyester is most suitable.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method. For sealing at a high temperature, it is desirable that at least the outermost layer be a biaxially stretched polyester.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 µm, preferably about 3 to 25 µm.

### (Barrier Layer 33)

In the exterior material for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e. a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, about 20 to 45 µm, about 45 to 65 µm or about 65 to 85 µm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include adhesives formed of a polyester polyol compound and an alicyclic isocyanate compound.

The thickness of the adhesive layer 34 is, for example, about 1 to 40 µm, preferably about 2 to 30 µm.

### (Heat-sealable resin layer 35)

In the exterior material 3 for electrical storage devices, the heat-sealable resin layer 35 is a layer which corresponds to an innermost layer and performs a function of hermetically sealing the electrical storage device element by heat-sealing the heat-sealable resin layers to each other during construction of the electrical storage device.

The resin component to be used in the heat-sealable resin layer 35 is not particularly limited as long as it can be heat-sealed, and for the exterior material for electrical storage devices, examples thereof generally include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may be formed of only one layer, but may be formed of two or more layers with the same resin component or different resin components.

The thickness of the heat-sealable resin layer 35 is not particularly limited, and is, for example, about 2 to 2000 µm, preferably about 5 to 1000 µm, still more preferably about 10 to 500 µm.

As described above, it is desirable that the melting peak temperature of the heat-sealable resin layer 35 of the exterior material 3 for electrical storage devices be higher than 100°C, i.e., the lower limit of the melting peak temperature of the resin layer L. The melting peak temperature of the heat-sealable resin layer 35 is preferably 150 to 250°C, more preferably 180 to 270°C, still more preferably 200 to 270°C, still more preferably 200 to 250°C. As described above, the melting peak temperature of the resin layer L is preferably lower by 5°C or more, more preferably lower by 10°C or more, still more preferably lower by 15°C or more than that of the melting peak temperature of the heat-sealable resin layer 35 of the exterior material 3 for electrical storage devices, from the viewpoint of further suitably exhibiting the effect of the present disclosure.

Examples of the resin contained in the heat-sealable resin layer 35 of the exterior material for all-solid-state batteries include polyolefins such as polypropylene and polyethylene, acid-modified polyolefins such as acid-modified polypropylene and acid-modified polyethylene, and polybutylene terephthalate. Among them, polybutylene terephthalate is excellent in heat resistance, and therefore it is preferable that in the exterior material for all-solid-state batteries, the heat-sealable resin layer 35 is formed of a polybutylene terephthalate film. The heat-sealable resin layer 35 is formed of a polybutylene terephthalate film, and therefore is also excellent in adhesion to the resin layer L of the adhesive film of the present disclosure. The polybutylene terephthalate film that forms the heat-sealable resin layer 35 may be formed into the heat-sealable resin layer 35 by laminating a polybutylene terephthalate film prepared in advance with the adhesive layer 34, or may be formed into a film by melt-extruding a resin for forming the polybutylene terephthalate film and laminated with the adhesive layer 34.

The polybutylene terephthalate film may be a stretched polybutylene terephthalate film or an unstretched polybutylene terephthalate film, and is preferably an unstretched polybutylene terephthalate film.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 35 may be composed of only one layer, or may be composed of two or more layers with the same resin component or different resin components. When the heat-sealable resin layer 35 is composed of two or more layers, at least one layer is preferably formed from a polybutylene terephthalate film, and the polybutylene terephthalate film is preferably an innermost layer of the exterior material for all-solid-state batteries. The layer bonded to the adhesive layer 34 is preferably a polybutylene terephthalate film. When the heat-sealable resin layer 35 is formed from two or more layers, the layer which is not formed from a polybutylene terephthalate film may be, for example, a layer formed from a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to polybutylene terephthalate, it is preferable that the heat-sealable resin layer 35 includes only a polybutylene terephthalate film.

### 2. Electrical storage device

The electrical storage device 10 of the present disclosure is an electrical storage device having a structure in which an electrical storage device element 4 is housed in a packaging formed of the exterior material 3 for electrical storage devices. The exterior material 3 for electrical storage devices includes a laminate including at least the base material layer 31, the barrier layer 33 and the heat-sealable resin layer 35 in this order from the outside, and the heat-sealable resin layers 35 of the exterior material 3 for electrical storage devices are heat-sealed to house the electrical storage device element 4 in the packaging. The adhesive film 1 is disposed so as to be interposed between the heat-sealable resin layers 35 at a location where the heat-sealable resin layers 35 are heat-sealed. As described above, the adhesive film 1 has a multi-layered structure, and includes at least one resin layer L having a melting peak temperature of 100°C or higher and 135°C or lower. That is, the electrical storage device 10 of the present disclosure can be manufactured by a method including a housing step of housing the electrical storage device element 4 in a packaging by disposing the adhesive film 1 so as to interpose the adhesive film 1 between the heat-sealable resin layers 35 at a location where the heat-sealable resin layers 35 of the exterior material 3 for electrical storage devices are heat-sealed, and heat-sealing the heat-sealable resin layers 35 with the adhesive film 1 interposed therebetween.

Specifically, the electrical storage device element 4 including at least a positive electrode, a negative electrode and an electrolyte is covered with the exterior material 3 for electrical storage devices such that a flange portion (a region that where the heat-sealable resin layers 35 are in contact with each other, the region forming the peripheral edge portion 3a of the exterior material for electrical storage devices) of the exterior material 3 for electrical storage devices can be formed on the peripheral edge of the electrical storage device element 4 while the metal terminal 2 connected to each of the positive electrode and the negative electrode protrudes to the outside, and the heat-sealable resin layers 35 at the flange portion are heat-sealed to seal the electrical storage device element 4. Here, at a part of a location where heat-sealing is performed, the adhesive film 1 is disposed between the heat-sealable resin layers 35, and heat-sealed, thereby providing the electrical storage device 10 utilizing the adhesive film 1. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

Details of the adhesive film 1 of the present disclosure which is used in the electrical storage device 10 of the present disclosure are as described above.

As described above, the adhesive film 1 is disposed so as to be interposed between the heat-sealable resin layers 35 at a location where the heat-sealable resin layers 35 of the exterior material 3 for electrical storage devices are heat-sealed in the electrical storage device 10. As shown in, for example, Figs. 1 and 2, the adhesive film 1 of the present disclosure is interposed between heat-sealable resin layers facing each other at the location of the peripheral edge portion 3a of the exterior material 3 for electrical storage devices where the heat-sealable resin layers 35 are heat-sealed for sealing an electrical storage device element 4 in the electrical storage device 10 of the present disclosure. The adhesive film 1 and the heat-sealable resin layer 35 on each of both sides thereof are heat-sealed in sealing of the electrical storage device element 4 with the exterior material 3 for electrical storage devices.

The electrical storage device 10 of the present disclosure is sealed until reaching a high temperature (for example, about 100°C to 125°C), and the electrical storage device 10 is unsealed at the location of the adhesive film 1 between the heat-sealable resin layers 35 to release gas generated inside the electrical storage device 10 to the outside when the electrical storage device 10 reaches the high temperature (for example, about 100°C to 125°C). Since the adhesive film 1 is disposed at a part of the location where the heat-sealable resin layers 35 of the exterior material 3 for electrical storage devices are heat-sealed, gas can be selectively discharged to the outside from the specific location where the adhesive film 1 is disposed. That is, in the electrical storage device 10 of the present disclosure, the location where gas is discharged by unsealing can be set at any location in the hear-sealing portion between the heat-sealable resin layers 35.

As described above, the location where the adhesive film 1 is disposed is not particularly limited as long as it is a location where the heat-sealable resin layers 35 of the exterior material 3 for electrical storage devices are heat-sealed. For example, when the electrical storage device 10 has an oblong shape in plan view, the adhesive film 1 may be disposed on either the long side or the short side of the peripheral edge portion 3a of the heat-sealed exterior material 3 for electrical storage devices. Preferably, the adhesive film 1 is disposed with the adhesive film 1 exposed to the inside of the exterior material 3 for electrical storage devices (such that the adhesive film 1 is not fully buried at a portion where the heat-sealable resin layers 35 of the exterior material 3 for electrical storage devices are heat-sealed). The adhesive film 1 may be disposed at one, or two or more, of locations where the heat-sealable resin layers 35 of the exterior material 3 for electrical storage devices are heat-sealed.

In the electrical storage device 10 of the present disclosure, the size of the adhesive film 1 is not particularly limited as long as gas is appropriately discharged at the time of unsealing as described above. For example, when as shown in Fig. 1, the electrical storage device 10 has a rectangular shape in plan view, and the adhesive film 1 is disposed along one side of the rectangular shape (in the example of Fig. 1, the adhesive film is disposed along the z direction), the ratio of the length of the adhesive film 1 to the length of the side may be about 3 to 98%. The size of the adhesive film 1 in the width direction (a direction perpendicular to the length direction and the thickness direction; or a direction along the x direction in the example of Fig. 1) may be about 20 to 300% with respect to the size of the adhesive film in the length direction, which is defined as 100%.

In the electrical storage device 10, a metal terminal 2 is electrically connected to the electrical storage device element 4, and protrudes to the outside of the exterior material 3 for electrical storage devices. It is preferable that the adhesive film of the present disclosure is not located between the metal terminal 2 and the exterior material 3 for electrical storage devices (heat-sealable resin layer 35). Further, it is preferable that the adhesive film 1 of the present disclosure is not in contact with the metal terminal 2.

The electrical storage device of the present disclosure may be an electrical storage device such as a battery (including a condenser, a capacitor and the like). The electrical storage device of the present disclosure may be either a primary battery or secondary battery, and is preferably a secondary battery. The type of the secondary battery is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, lithium ion batteries and lithium ion polymer batteries are suitable.

### EXAMPLES

Hereinafter, the present disclosure will be described in detail by way of examples and comparative examples. However, the present disclosure is not limited to the examples.

### <Manufacturing of adhesive film>

### Example 1

Using an extruder and a T-die casting apparatus, acid-modified polyethylene (melting peak temperature: 122.7°C) containing a polyolefin-based elastomer (addition amount: 10 mass%) as a first layer (resin layer L) and acid-modified polyethylene (melting peak temperature: 120°C) as a second layer (resin layer L) were each extruded in a thickness of 25 µm to obtain an adhesive film (total thickness: 50 µm) in which a first layer (resin layer L: a PEa layer having a melting peak temperature of 122.7°C and a thickness of 25 µm) and a second layer (resin layer L: a PEa layer having a melting peak temperature of 120°C and a thickness of 25 µm) were laminated in this order.

### Example 2

Using an extruder and a T-die casting apparatus, polypropylene (melting peak temperature: 140°C) as a second layer and polypropylene (melting peak temperature: 140°C) as a third layer were extruded in a thickness of 7.5 µm to one surface and the other surface, respectively, of a polyethylene film (melting peak temperature: 120°C, thickness: 15 µm) as a first layer (resin layer L) to obtain an adhesive film (total thickness: 30 µm) in which a second layer (a PP layer having a melting peak temperature of 140°C and a thickness of 7.5 µm), a first layer (resin layer L: a PE layer having a melting peak temperature of 120°C and a thickness of 15 µm) and a third layer (a PP layer having a melting peak temperature of 140°C and a thickness of 7.5 µm) were laminated in this order.

### Example 3

Using an extruder and a T-die casting apparatus, polypropylene (melting peak temperature: 140°C) as a second layer and polypropylene (melting peak temperature: 140°C) as a third layer were extruded in a thickness of 7.5 µm to one surface and the other surface, respectively, of a polyethylene film (melting peak temperature: 110°C, thickness: 15 µm) as a first layer (resin layer L) to obtain an adhesive film (total thickness: 30 µm) in which a second layer (a PP layer having a melting peak temperature of 140°C and a thickness of 7.5 µm), a first layer (resin layer L: a PE layer having a melting peak temperature of 110°C and a thickness of 15 µm) and a third layer (a PP layer having a melting peak temperature of 140°C and a thickness of 7.5 µm) were laminated in this order.

### Example 4

Using an extruder and a T-die casting apparatus, maleic anhydride-modified polypropylene (melting peak temperature: 140°C) as a second layer and maleic anhydride-modified polypropylene (melting peak temperature: 140°C) as a fourth layer were extruded in a thickness of 30 µm to one surface and the other surface, respectively, of a polyethylene naphthalate film (melting peak temperature: 265°C, thickness: 12 µm) as a third layer, and acid-modified polyethylene (melting peak temperature: 122.7°C) containing a polyolefin-based elastomer (addition amount: 10 mass%) as a first layer (resin layer L) was extruded in a thickness of 33 µm to the surface of the second layer to obtain an adhesive film (total thickness: 100 µm) in which a first layer (resin layer L: a PEa layer having a melting peak temperature of 122.7°C and a thickness of 33 µm), a second layer (a PPa layer having a melting peak temperature of 140°C and a thickness of 30 µm), a third layer (a PEN layer having a melting peak temperature of 265°C and a thickness: 12 µm) and a fourth layer (a PPa layer having a melting peak temperature of 140 °C and a thickness of 30 µm) were laminated in this order.

### Comparative Example 1

A single layer of a polyethylene film (melting peak temperature: 125°C, thickness: 50 µm) was used as an adhesive film (total thickness: 50 µm).

### Comparative Example 2

A co-extruded three-layered unstretched polypropylene film (CPP layer: polypropylene (melting peak temperature: 140°C, thickness: 10 µm)/polypropylene (melting peak temperature: 140°C, thickness: 20 µm)/polypropylene (melting peak temperature: 140°C, thickness: 10 µm)) was used as an adhesive film (total thickness: 40 µm).

### <Measurement of melting peak temperature>

For each resin, the melting peak temperature was measured in accordance with the provisions of JIS K 7121: 2012 (Testing Methods for Transition Temperatures of Plastics (Amendment 1 of JIS K 7121: 1987)). The measurement was performed with a differential scanning calorimeter (DSC, Differential Scanning Calorimeter Q200 manufactured by TA Instruments). The measurement sample was held at -50°C for 15 minutes, then heated from -50°C to 210°C at a temperature rise rate of 10°C/min to measure the first melting peak temperature P (°C), and then held at 210°C for 10 minutes. Next, the measurement sample was cooled from 210°C to -50°C at a temperature lowering rate of 10°C/min, and held for 15 minutes. Further, the second melting peak temperature Q (°C) was measured by heating the measurement sample from -50°C to 210°C at a temperature rise rate of 10°C/min. The flow rate of the nitrogen gas was set to 50 ml/min. In accordance with the above procedure, the first measured melting peak temperature P (°C) and the second measured melting peak temperature Q (°C) were determined, and the first measured melting peak temperature was adopted as a melting peak temperature.

### <Unsealing Test Method>

An exterior material for electrical storage devices with a total thickness of 121 µm, in which a base material layer (PET (thickness: 12 µm)/adhesive (thickness: 2 µm)/nylon (thickness: 15 µm)), an adhesive agent layer (thickness: 2 µm), a barrier layer (aluminum alloy foil having a thickness of 40 µm)/an adhesive layer (maleic anhydride-modified polypropylene having a thickness of 25 µm) and a heat-sealable resin layer (polypropylene having a melting peak temperature of 140°C and a thickness of 25 µm) were laminated in this order, was prepared, and cut to provide two test pieces having a size of 8 cm in width (z direction) and 19 cm in length (x direction). Next, these two test pieces were superposed such that their heat-sealable resin layers faced each other, thereby providing a pair of superposed test pieces forming a short side of 8 cm in the width direction (z direction) and a long side of 19 cm in the length direction (x direction). As shown in the schematic views of Figs. 1 and 2, the adhesive film was disposed between the heat-sealable resin layers at a location of the peripheral edge portion 3a on the side of the short side where the heat-sealable resin layers of the exterior material for electrical storage devices were heat-sealed. The size of the adhesive film was set to 3 cm in wide (z direction) and 1.5 cm in length (x direction). A metal terminal was not used in the unsealing test method although a metal terminal is present in the schematic view of Fig. 1. Further, the adhesive film was disposed so as to match the test piece in the width direction (z direction) and the length direction (x direction). More specifically, in the width direction (z direction), the locations of the centers of the test piece and the adhesive film matched each other, and in the length direction (x direction), the lower end of the adhesive film in the length direction (x direction) was aligned with a short side of 8 cm which formed the lower end of the test piece in the length direction (x direction). Next, under the conditions of a pressure of 0.5 MPa, a temperature of 190°C and a seal width of 3 mm, a short side on which the adhesive film of the exterior material for electrical storage devices as a test piece was disposed, and a short side opposed thereto were heat-sealed. Here, both surfaces of the adhesive film are heat-sealed to the heat-sealable resin layer. On both sides of the adhesive film, there is a margin of 0.8 cm which has not been heat-sealed with the exterior material for electrical storage devices. Further, one long side of the exterior material for electrical storage devices as a test piece was also heat-sealed to obtain a bag-shaped sample in which opposed short sides and one long side were heat sealed and the other long side that was not heat-sealed formed an opening. The bag-shaped sample was charged with 1 g of water, and the opening side (long side) was also heat-sealed to obtain a test sample in which water was sealed. A thermocouple was attached to the test sample, the test sample was placed in an oven, and heated from room temperature (25°C) to a test sample temperature of 140°C at a temperature rise rate of 6°C/min. The unsealing temperature was evaluated on the basis of the following criteria. The results are shown in Table 1.
A: Unsealing occurred at 100°C or higher and 125°C or lower.
B: Unsealing occurred at a temperature of lower than 100°C.
C: Unsealing occurred at a temperature of higher than 125°C.

### [Measurement of sealing strength (measurement temperatures of 25°C, 60°C, 100°C and 120°C)]

The exterior material for electrical storage devices, which had been used in <Unsealing test method> above, was cut into a size of 60 mm in width (Z direction) and 150 mm in length (X direction), and then folded in half with the heat-sealable resin layer on the inner side, and the adhesive film (60 mm in Z direction and 15 mm in X direction) was sandwiched between the inner surfaces (the bent parts of the sample folded in half). In this state, heat sealing was performed under the condition of 240°C × 1.0 MPa × 5 seconds using a sealing machine with upper and lower metal heads having a width of 7 mm, thereby preparing a test piece. The obtained laminate was cut to acquire a 15 mm strip-shaped test piece (in which both surfaces of the adhesive film are heat-sealed in their entirety to the heat-sealable resin layer) from the center part of the location where the adhesive film was sandwiched between the heat-sealable resin layers. In accordance with the provision of JIS K 7127: 1999, the sealing strength of the obtained test piece in each of environments at measurement temperatures of 25°C, 60°C, 100°C and 120°C was measured as follows. In each of measurement environments at 25°C, 60°C, 100°C and 120°C, one exterior material and an opposed exterior material were chucked, and pulled at a speed of 300 mm/min (distance between chucks is 50 mm) with a tensile tester with a thermostatic bath to measure the sealing strength (N/15 mm) at each temperature. The results are shown in Table 1. With the evaluation based on the sealing strength (rounded value) at a measurement temperature of 60°C, the seal strength at 60°C was evaluated on the basis of the following criteria. The results are shown in Table 1.
A+: 51 N/15 mm or more
A: 11 N/15 mm or more and 50 N/15 mm or less
B: 10 N/15 mm or less

**[Table 1]**

| Table 1 | Laminated configuration of adhesive film (melting peak temperature (°C), thickness (µm)) | Evaluation of unsealing temperature | Sealing strength (N/15 mm) | | | | Evaluation of sealing strength retention at 60°C |
|---|---|---|---|---|---|---|---|
| | | | 25 °C | 60°C | 100°C | 120°C | |
| Example 1 | PE layer (122.7°C, 25 µm)/PE layer (120°C, 25 µm) | A | 24.2 | 0.8 | 0.7 | 0.5 | B |
| Example 2 | PP layer (140°C, 7.5 µm)/PE layer (120°C, 15 µm)/ PP layer (140°C, 7.5 µm) | A | 122.0 | 108.4 | 44.6 | 4.4 | A+ |
| Example 3 | PP layer (140°C, 7.5 µm)/PE layer (110°C, 15 µm)/ PP layer (140°C, 7.5 µm) | A | 134.6 | 116.7 | 62.9 | 5.6 | A+ |
| Example 4 | PE layer (122.7°C, 33 µm)/PPa layer (140°C, 30 µm)/ PEN layer (265°C, 12 µm)/PPa layer (140°C, 30 µm) | A | 53.1 | 15.1 | 5.1 | 9.6 | A |
| Comparative Example 1 | PE layer (125°C, 50 µm) | B | 66.2 | 9.9 | 1.6 | 0.9 | B |
| Comparative Example 2 | CPP layer (PP layer (140°C, 10 µm)/PP layer (140°C, 20 µm)/ PP layer (140°C, 10 µm)) | C | 133.7 | 114.8 | 89.8 | 69.3 | A+ |

The adhesive films of Examples 1 to 4 have a multi-layered structure, and include a layer corresponding to a resin layer L having a melting peak temperature of 100°C or higher and 135°C or lower (first layer (PEa layer) and second layer (PEa layer) in Example 1, first layer (PE layer) in Example 2, first layer (PE layer) in Example 3 and first layer (PEa layer) in Example 4. As is evident from the results of evaluation of the unsealing temperature shown in Table 1, the adhesive films of Examples 1 to 4 are capable of sealing the electrical storage device until the electrical storage device reaches a high temperature (for example, about 100°C to 125°C), and unseal the electrical storage device at the location of the adhesive film between the heat-sealable resin layers to release gas generated inside the electrical storage device to the outside when the electrical storage device reaches the high temperature (for example, about 100°C to 125°C).

In the unsealing test, unsealing occurred at the location of the adhesive film for all the adhesive films of Examples 1 to 4.

As described above, the present disclosure provides inventions of aspects as described below.

Item 1. An adhesive film that is used for an electrical storage device,
the electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film having a multi-layered structure,
the adhesive film including at least one resin layer L having a melting peak temperature of 100°C or higher and 135°C or lower.

Item 2. The adhesive film according to item 1, in which a melting peak temperature of the resin layer L is lower by 5°C or more than a melting peak temperature of the heat-sealable resin layer of the exterior material for electrical storage devices.

Item 3. The adhesive film according to item 1 or 2, in which the resin layer L contains a polyolefin backbone.

Item 4. The adhesive film according to any one of items 1 to 3, in which a thickness of the resin layer L is 0.1 µm or more.

Item 5. The adhesive film according to any one of items 1 to 4, in which a thickness of the adhesive film is 5 µm or more and 500 µm or less.

Item 6. An electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being disposed so as to be interposed between the heat-sealable resin layers at a location where the heat-sealable resin layers are heat-sealed,
the adhesive film having a multi-layered structure,
the adhesive film including at least one resin layer L having a melting peak temperature of 100°C or higher and 135°C or lower.

Item 7. An electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being disposed so as to be interposed between the heat-sealable resin layers at a location where the heat-sealable resin layers are heat-sealed,
the adhesive film having a multi-layered structure,
the packaging being unsealed at 100°C or higher and 120°C or lower.

Item 8. A method for manufacturing an electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the method including a housing step of housing the electrical storage device element in the packaging by disposing an adhesive film so as to interpose the adhesive film between the heat-sealable resin layers at a location where the heat-sealable resin layers of the exterior material for electrical storage devices are heat-sealed, and heat-sealing the heat-sealable resin layers with the adhesive film interposed therebetween,
the adhesive film having a multi-layered structure,
the adhesive film including at least one resin layer L having a melting peak temperature of 100°C or higher and 135°C or lower.

Item 9. A kit including an exterior material for electrical storage devices which is used for an electrical storage device, and the adhesive film according to any one of items 1 to 5,
the electrical storage device having a structure in which an electrical storage device element is housed in a packaging formed of an exterior material for electrical storage devices,
the exterior material for electrical storage devices including a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being interposed between the heat-sealable resin layers at a location where the heat-sealable resin layers are heat-sealed at the time of use.

### DESCRIPTION OF REFERENCE SIGNS

1: Adhesive film
2: Metal terminal
3: Exterior material for electrical storage devices
3a: Peripheral edge portion of exterior material for electrical storage devices
4: Electrical storage device element
5: Adhesive film for metal terminal
10: Electrical storage device
11: First layer (resin layer L)
12: Second layer
13: Third layer
14: Fourth layer
31: Base material layer
32: Adhesive agent layer
33: Barrier layer
34: Adhesive layer
35: Heat-sealable resin layer

## Claims

1. An adhesive film that is used for an electrical storage device,
the electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being used by being interposed between the heat-sealable resin layers at a location where the heat-sealable resin layers are heat-sealed,
the adhesive film having a multi-layered structure,
the adhesive film including at least one resin layer L having a melting peak temperature of 100°C or higher and 135°C or lower.

2. The adhesive film according to claim 1, wherein a melting peak temperature of the resin layer L is lower by 5°C or more than a melting peak temperature of the heat-sealable resin layer of the exterior material for electrical storage devices.

3. The adhesive film according to claim 1 or 2, wherein the resin layer L contains a polyolefin backbone.

4. The adhesive film according to any one of claim 1 or 2, wherein a thickness of the resin layer L is 0.1 µm or more.

5. The adhesive film according to any one of claim 1 or 2, wherein a thickness of the adhesive film is 5 µm or more and 500 µm or less.

6. An electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being disposed so as to be interposed between the heat-sealable resin layers at a location where the heat-sealable resin layers are heat-sealed,
the adhesive film having a multi-layered structure, and
the adhesive film including at least one resin layer L having a melting peak temperature of 100°C or higher and 135°C or lower.

7. An electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the electrical storage device element being housed in the packaging by heat-sealing the heat-sealable resin layers of the exterior material for electrical storage devices,
the adhesive film being disposed so as to be interposed between the heat-sealable resin layers at a location where the heat-sealable resin layers are heat-sealed,
the adhesive film having a multi-layered structure, and
the packaging being unsealed at 100°C or higher and 120°C or lower.

8. A method for manufacturing an electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the method comprising a housing step of housing the electrical storage device element in the packaging by disposing an adhesive film so as to interpose the adhesive film between the heat-sealable resin layers at a location where the heat-sealable resin layers of the exterior material for electrical storage devices are heat-sealed, and heat-sealing the heat-sealable resin layers with the adhesive film interposed therebetween,
the adhesive film having a multi-layered structure, and
the adhesive film including at least one resin layer L having a melting peak temperature of 100°C or higher and 135°C or lower.

9. A kit including an exterior material for electrical storage devices which is used for an electrical storage device, and the adhesive film according to any one of claims 1 to 5,
the electrical storage device having a structure in which an electrical storage device element is housed in a packaging formed of an exterior material for electrical storage devices,
the exterior material for electrical storage devices comprising a laminate including at least a base material layer, a barrier layer and a heat-sealable resin layer in this order from the outside,
the electrical storage device element being housed in the packaging by heat-sealing the heat-sealable resin layers of the exterior material for electrical storage devices, and
the adhesive film being interposed between the heat-sealable resin layers at a location where the heat-sealable resin layers are heat-sealed at the time of use.
